# EUROPEAN PATENT SPECIFICATION

(11) **EP 4 159 481 B1**
(45) Date of publication and mention of the grant of the patent: **25.12.2024**
(21) Application number: 21812919.5
(22) Date of filing: 08.01.2021
(51) Int. Cl.: B60C 9/20, B60C 15/00, B60C 15/06, B60C 9/18, B60C 9/04

(54) **PNEUMATIC TIRE**
LUFTREIFEN
BANDAGE PNEUMATIQUE

(30) Priority: 27.05.2020 JP 2020092585
(43) Date of publication of application: 05.04.2023
(73) Proprietor: BRIDGESTONE CORPORATION, Chuo-ku Tokyo 104-8340 (JP)
(72) Inventor: MIYAZONO, Toshiya, Tokyo 104-8340 (JP)
(74) Representative: Marks & Clerk LLP
(86) International application number: PCT/JP2021/000564
(87) International publication number: WO 2021/240862

(56) References cited:
- EP-A1- 3 632 703
- JP-A- 2006 160 108
- JP-A- 2013 107 577
- JP-A- 2014 019 258
- JP-A- 2016 165 923
- JP-A- 2019 018 762
- JP-A- 2020 001 472
- US-A1- 2010 065 184

## Description

### TECHNICAL FIELD

The present invention relates to a pneumatic tire.

### BACKGROUND

Conventionally, pneumatic tires provided with a carcass and an inclined belt formed by plies that include a plurality of cords arranged in parallel to each other are known. During travel on a road surface, stress tends to concentrate at locations such as the tire widthwise outer end of the inclined belt and the tire radial outer end of the turn-up portion of the carcass due to the difference in rigidity from the surrounding rubber, thereby causing cracks in the rubber that can easily become the core of separation.

Patent literature (PTL) 1 discloses a pneumatic radial tire in which a supplementary reinforcement layer is disposed adjacent to the cut-off portion of the cords at the widthwise edge of the belt layer or the carcass ply wrap-around edge, thereby reducing the difference in rigidity from the surrounding rubber, which in turn reduces the above-described stress concentration.

Also, PTL 2 discloses a pneumatic radial tire that has non-woven fiber/rubber composite layer, in which a rubber component is impregnated into a non-woven fabric formed by organic fibers, disposed at the tire widthwise end of the belt.

### CITATION LIST

### Patent Literature

PTL 1: JP 2005-145318 A
PTL 2: JP 2003-154810 A

According to its abstract, JP 2019 018762 A describes a pneumatic tire that includes: a beam part; a side wall part; a tread part; a carcass that is made of at least one carcass ply extended in a toroidal shape astride the bead part; and a belt that is made of at least one belt layer arranged on the tire radial-direction outside of the carcass. At least a part is arranged near at least one of the carcass ply and the belt layer, and at least a part is arranged in a range of 3.0 mm from an outer surface of the tire.

According to its abstract, JP 2020 001472 A describes a pneumatic tire that includes: a carcass having a carcass ply in which a plurality of cords are coated with a coating rubber from one bead part to the other bead part; a belt including a resin layer formed of a resin which is arranged outside in a tire radial direction of the carcass and has tensile elastic modulus higher than the coating rubber; and a belt protective layer which is joined to a surface of the resin layer and is formed of a material having tensile elastic modulus higher than the coating rubber.

According to its abstract, JP 2006 160108 A describes a pneumatic radial tire capable of demonstrating the excellent high-speed durability without providing a band layer. In a belt layer, an outer end in the tire axial direction is gradually separated from a carcass outwardly in the tire axial direction, and a cushion rubber is arranged in the separate part. The cushion rubber consists of a short-fiber blended rubber with short fibers blended therein, and the short fibers are oriented in the tire circumferential direction.

According to its abstract, EP 3 632 703 A1 describes a pneumatic tire that includes a carcass, an intersecting belt layer, and a restraining member. The carcass spans from one bead portion to another bead portion. The intersecting belt layer is arranged at an outer circumferential side of the carcass and is configured including plural belt plies each configured by covering a row of plural mutually parallel belt cords with a resin, such that the belt cords of one of adjacent belt plies and the belt cords of the other of the adjacent belt plies intersect each other. The restraining member is arranged adjacent to end portions of the belt plies so as to restrain movement of the end portions.

### SUMMARY

### (Technical Problem)

According to the pneumatic radial tires disclosed as pneumatic tires in PTL 1 and 2, a reinforcement layer such as the supplementary reinforcement layer in PTL 1 and the non-woven fiber/rubber composite layer in PTL 2 is provided, thereby suppressing the occurrence of separation at the position of the cut edge of the plies, such as the widthwise edge of the belt layer or the carcass ply wrap-around edge. However, there is still room for improvement in terms of reducing the stress concentration at the position of the end of the reinforcement layer itself in the pneumatic tires disclosed in PTL 1 and 2.

It is an aim of the present invention to provide a pneumatic tire capable of relieving stress concentration at the position of the end of the reinforcement layer, in addition to relieving stress concentration at the location of the cut edge of the ply.

### (Solution to Problem)

A pneumatic tire in a first aspect is defined by the features of claim 1.

### (Advantageous Effect)

According to the present invention, a pneumatic tire capable of relieving stress concentration at the position of the end of the reinforcing layer, in addition to relieving stress concentration at the location of the cut edge of the ply, can be provided.

### BRIEF DESCRIPTION OF THE DRAWINGS

In the accompanying drawings:
FIG. 1 is a tire widthwise cross-sectional view of a pneumatic tire as an embodiment of the present invention;
FIG. 2 is an enlarged view of the area near a belt reinforcement layer illustrated in FIG. 1;
FIG. 3 is a diagram illustrating details of a mounting configuration of the belt reinforcement layer and a carcass reinforcement layer illustrated in FIG. 1;
FIG. 4A is a cross-sectional view of a metal fiber forming a reinforcement layer of the pneumatic tire illustrated in FIG. 1;
FIG. 4B is a cross-sectional view of a variation of the metal fiber illustrated in FIG. 4A;
FIG. 5 is a diagram illustrating a variation of the reinforcement layer illustrated in FIG. 1, which however does not form part of the present invention; and
FIG. 6 is a diagram illustrating another variation of the reinforcement layer illustrated in FIG. 1, which however does not form part of the present invention.

### DETAILED DESCRIPTION

Embodiments of a pneumatic tire according to the present invention are described below with reference to the drawings. Configurations that are common across drawings are labeled with the same reference signs.

Hereafter, unless otherwise specified, the dimensions, length relationships, positional relationships, and the like of each element are assumed to be measured in a reference state in which the pneumatic tire is mounted on an applicable rim, filled to a prescribed internal pressure, and under no load.

The "applicable rim" refers to a standard rim designated in the following standards in accordance with tire size ("Design Rim" in the YEAR BOOK of the Tire and Rim Association, Inc. (TRA), and "Measuring Rim" in the STANDARDS MANUAL of the European Tyre and Rim Technological Organisation (ETRTO)). The standards are determined according to an effective industrial standard in areas where the tire is produced or used. Examples of the standards include the YEAR BOOK of the TRA in the USA, the STANDARDS MANUAL of the ETRTO in Europe, and the JATMA YEAR BOOK of the Japan Automobile Tyre Manufacturers Association (JATMA) in Japan.

The "applicable rim" includes sizes that could be included in the future in the aforementioned industrial standards, in addition to current sizes. Examples of the sizes that could be described in the future in the aforementioned industrial standards include the sizes described under "FUTURE DEVELOPMENTS" in the ETRTO 2013 edition. In the case of a size not listed in the aforementioned industrial standards, the "applicable rim" refers to a rim whose width corresponds to the bead width of the pneumatic tire.

The "prescribed internal pressure" refers to the air pressure (maximum air pressure) corresponding to the maximum load capability of a single wheel for the applicable size/ply rating in the aforementioned JATMA YEAR BOOK or the like. In the case of a size not described in the aforementioned industrial standards, the "prescribed internal pressure" refers to the air pressure (maximum air pressure) corresponding to the maximum load capability prescribed for each vehicle on which the tire is mounted. The "maximum load" described below refers to the tire maximum load capability specified in the aforementioned standards, such as JATMA, for tires of the applicable size, or in the case of sizes not specified in the aforementioned industrial standards, the "maximum load" refers to the load corresponding to the maximum load capability specified for each vehicle on which the tire is mounted.

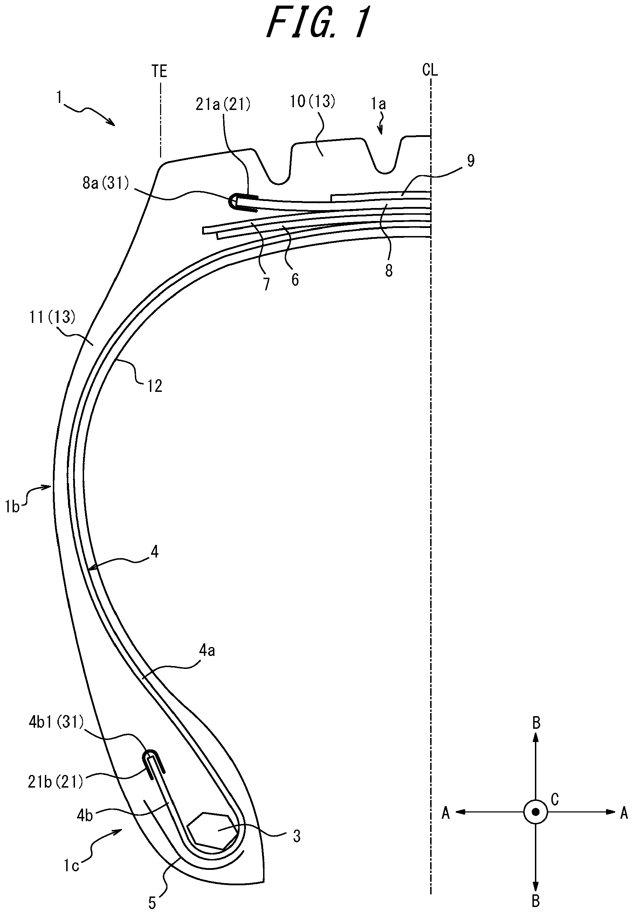

FIG. 1 illustrates a pneumatic tire 1 (hereinafter simply referred to as "tire 1") according to the present invention. Specifically, FIG. 1 is a cross-sectional view of the tire 1, in a cross-section parallel to the tire width direction A and including the tire center axis, in the reference state in which the tire 1 is mounted on an applicable rim, filled to the prescribed internal pressure, and under no load. Hereafter, this cross-section is referred to as the "tire widthwise cross-section". Since the tire 1 has a symmetrical configuration with respect to the tire equatorial plane CL, FIG. 1 illustrates a tire widthwise cross-section on only one side of tire equatorial plane CL in the tire width direction A. However, the tire may have an asymmetrical configuration with respect to the tire equatorial plane CL.

As illustrated in FIG. 1, the tire 1 includes a tread portion 1a, a pair of sidewall portions 1b extending from both ends of the tread portion 1a in the tire width direction A inward in the tire radial direction B, and a pair of bead portions 1c provided at the inner ends of the sidewall portions 1b in the tire radial direction B. The tire 1 is a radial tire and has a configuration suitable for use as a pneumatic tire for trucks, buses, and other heavy load vehicles. Herein, the "tread portion 1a" refers to the portion sandwiched by tread ends TE on both sides in the tire width direction A. The "bead portion 1c" refers to the portion in the tire radial direction B where the below-described bead member 3 is located. The "sidewall portion 1b" refers to the portion between the tread portion 1a and the bead portion 1c. The "tread edge TE" refers to the outermost position of the contact patch in the tire width direction when the tire is mounted on the above-described applicable rim, filled to the above-described prescribed internal pressure, and placed under the maximum load.

Furthermore, the outer surface of the tire includes the outer surface of the tread portion 1a, which is the surface on the outer side of the tread portion 1a in the tire radial direction B, the outer surface of the sidewall portion 1b, which is the surface on the outer side of the sidewall portion 1b in the tire width direction A, and the outer surface of the bead portion 1c, which is the surface on the outer side of the bead portion 1c in the tire width direction A.

The tire 1 includes bead members 3, a carcass ply 4, a chafer 5, four layers of belt plies 6 to 9, tread rubber 10 and side rubber 11 as cover rubber 13, an inner liner 12, and a reinforcement layer 21.

### [Bead Member 3]

The bead member 3 is embedded in the bead portion 1c. The bead member 3 in the present embodiment is a bead core. The bead member 3 may be further provided with a rubber bead filler located outward from the bead core in the tire radial direction B. The bead core as the bead member 3 includes a plurality of bead cords that are coated by rubber. The bead cords are formed by steel cords. The steel cords can, for example, be made of steel monofilaments or twisted wires.

### [Carcass Ply 4]

The carcass ply 4 extends toroidally to straddle the pair of bead portions 1c, more specifically to straddle the pair of bead members 3. The carcass ply 4 of the present embodiment has a radial structure.

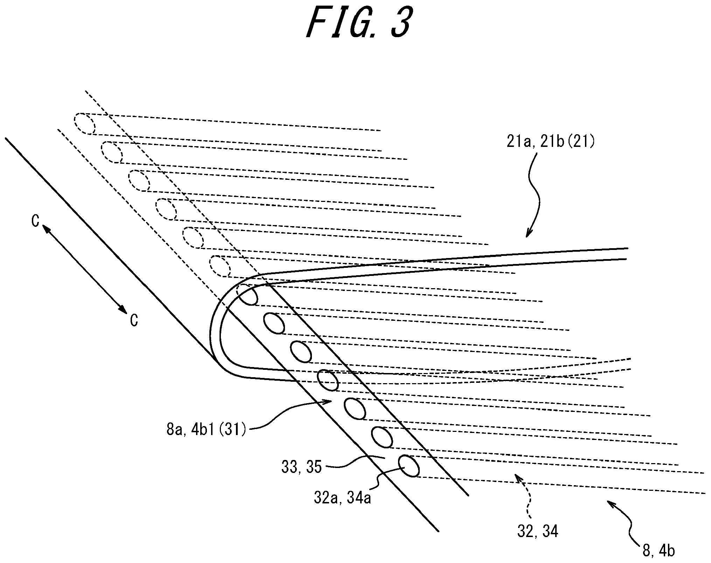

Specifically, the carcass ply 4 extends toroidally across a pair of bead members 3 and is folded from inside to outside in the tire width direction A around each bead member 3. The carcass ply 4 in the present embodiment includes a plurality of ply cords 34 (see FIG. 3) arranged in parallel to each other and coating rubber 35 (see FIG. 3) that covers the plurality of ply cords 34. Instead of including the coating rubber 35, however, the carcass ply 4 may be configured by, for example, arranging a plurality of ply cords that are made of brass, or plated with a material including brass, in parallel and bonding adjacent ply cords. The tire 1 in the present embodiment includes one carcass ply 4 but may instead include two or more carcass plies 4. The plurality of ply cords 34 of the carcass ply 4 are arranged at an angle of, for example, 75° to 90° with respect to the tire circumferential direction C. The ply cords 34 of the carcass ply 4 (see FIG. 3) can be metal cords, such as steel cords. The steel cords can be made of steel monofilaments or twisted wires with, for example, a brass coating on the surface. The ply cords 34 may also be organic fiber cords, for example, with a brass coating on the surface.

More specifically, the carcass ply 4 has a main body 4a located between the pair of bead members 3 and a turn-up portion 4b that is formed by being connected to the main body 4a and turned up from inside to outside in the tire width direction A around each bead member 3. As described above, the bead member 3 in the present embodiment is formed by a bead core but may further include a bead filler extending so as to taper outward in the tire radial direction B of the bead core. When the bead member 3 includes such a bead filler, the bead filler is arranged between the main body 4a and the turn-up portion 4b of the carcass ply 4.

### [Chafer 5]

The chafer 5 is arranged outward from each bead member 3 in the tire width direction A and outward from the turn-up portion 4b of the carcass ply 4 in the tire width direction A. Therefore, when the tire 1 is mounted on an applicable rim, damage to the bead portion 1c by the rim flange of the applicable rim can be suppressed.

As illustrated in FIG. 1, in a tire widthwise cross-sectional view, the inner end of the chafer 5 in the tire radial direction B may be wrapped around the bead member 3 from the outside to the inside in the tire width direction A.

The chafer 5 can, for example, be a chafer ply using a metal cord, such as a steel cord, or an organic fiber cord as the ply cord.

### [Belt Plies 6 to 9]

The belt plies 6 to 9 are disposed in the tread portion 1a. Specifically, the belt plies 6 to 9 are disposed outside of the carcass ply 4 in the tire radial direction B relative to the crown of the carcass ply 4. The tire 1 in the present embodiment includes four layers of belt plies 6 to 9, but the number of layers is not particularly limited as long as at least one layer is provided. Each belt ply 6 to 9 includes a plurality of ply cords 32 (see FIG. 3) arranged in parallel to each other and coating rubber 33 (see FIG. 3) that covers the plurality of ply cords 32. Instead of including the coating rubber 33, however, each belt ply 6 to 9 may be configured by, for example, arranging a plurality of ply cords that are made of brass, or plated with a material including brass, in parallel and bonding adjacent ply cords. Each belt ply 6 to 9 forms a sloped belt layer in which the cord cut edges 32a of the ply cords 32 are exposed at both ends in the tire width direction A. The plurality of ply cords 32 in each belt ply 6 to 9 extends at an angle with respect to the tire width direction A and the tire circumferential direction C. For example, the ply cords 32 are arranged to be inclined at an angle of 10° to 60° with respect to the tire circumferential direction C. The ply cords 32 in each belt ply 6 to 9 can be metal cords, such as steel cords. The steel cords can be made of steel monofilaments or twisted wires with, for example, a brass coating on the surface. The ply cords 32 may also be organic fiber cords, for example, with a brass coating on the surface.

### [Tread Rubber 10 and Side Rubber 11]

The tread rubber 10 covers the crown portion of the main body 4a of the carcass ply 4 and covers the outer side, in the tire radial direction B, of the four layers of belt plies 6 to 9. The outer surface of the tread portion 1a in the present embodiment is configured by the tread rubber 10. A tread pattern including circumferential grooves extending in the tire circumferential direction C, widthwise grooves extending in the tire width direction A, and the like is formed on the outer surface of the tread portion 1a.

The side rubber 11 covers the outside, in the tire width direction A, of the main body 4a and the turn-up portion 4b of the carcass ply 4. The outer surface of the sidewall portion 1b and the outer surface of the bead portion 1c in the present embodiment are configured by the side rubber 11. The upper end of the side rubber 11 in the tire radial direction B is connected to the end of the above-described tread rubber 10 in the tire width direction A.

In this way, the tread rubber 10 and side rubber 11 in the present embodiment as a whole form the cover rubber 13 of the tire 1, which covers the carcass ply 4 and the belt plies 6 to 9 and configures the tire outer surface.

### [Inner Liner 12]

The inner liner 12 covers the tire inner surface side of the main body 4a of the carcass ply 4 and configures the tire inner surface of the tire 1. The inner liner 12 is layered onto the tire inner surface side of the main body 4a of the carcass ply 4. The inner liner 12 may, for example, be formed from a butyl-based rubber having low air permeability. Butyl-based rubber refers to butyl rubber and butyl halide rubber, which is a derivative thereof.

### [Belt Reinforcement Layer 21]

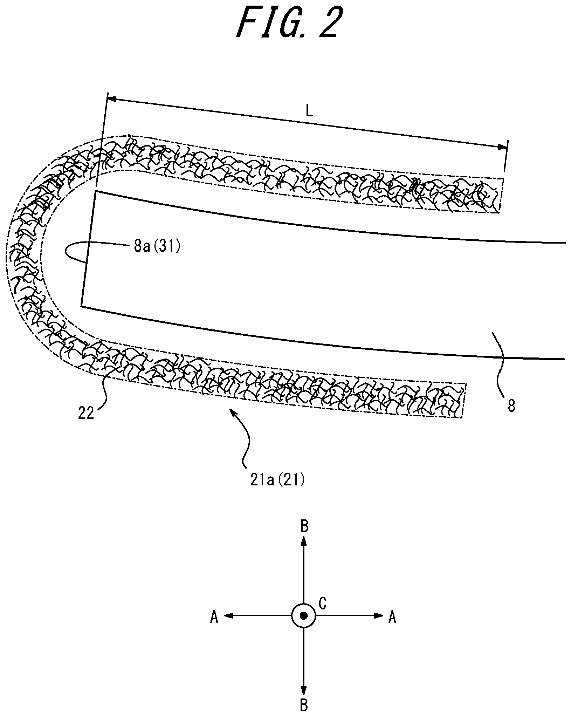

At a position of a cut edge 31 of a ply, the reinforcement layer 21 covers the cut edge 31 of the ply on both sides in the ply thickness direction The tire 1 in the present embodiment includes two reinforcement layers 21, i.e., a belt reinforcement layer 21a and a carcass reinforcement layer 21b. FIG. 2 is an enlarged view of the area near the belt reinforcement layer 21a illustrated in FIG. 1. The configuration of the carcass reinforcement layer 21b is the same as that of the belt reinforcement layer 21a. FIG. 3 illustrates the details of the mounting configuration of the belt reinforcement layer 21a and the carcass reinforcement layer 21b. As described above, the configuration of the carcass reinforcement layer 21b is the same as that of the belt reinforcement layer 21a. Therefore, for the sake of convenience, FIG. 3 does not distinguish between the mounting configuration of the belt reinforcement layer 21a and the carcass reinforcement layer 21b. The ply cords 32, 34 illustrated in FIG. 3 may be arrayed at any angle with respect to the extension direction of the cut edge 31 of the ply (the tire circumferential direction C in FIG. 3). In FIG. 3, for the sake of convenience, a cross-section of a portion of the belt reinforcement layer 21a and the carcass reinforcement layer 21b is illustrated.

As illustrated in FIGS. 1 to 3, with respect to an outer edge 8a in the tire width direction A, which acts as the cut edge 31 of the belt ply 8, the belt reinforcement layer 21a that is one of the reinforcement layers 21 covers the outer edge 8a, which acts as the cut edge 31 of the belt ply 8, at both sides (the inner side and outer side in the tire radial direction B in the present embodiment) in the belt ply thickness direction (the thickness direction of the belt ply 8 in the present embodiment, which is a direction equivalent to the tire radial direction B), which acts as the ply thickness direction. At the outer edge 8a as the cut edge 31 of the belt ply 8 in the present embodiment, a cord cut edge 32a of the belt cord as the ply cord 32 is exposed. The belt reinforcement layer 21a in the present embodiment extends in the tire width direction A so as to straddle the position, in the tire width direction A, of the outer edge 8a at both sides, in the tire radial direction B, of the outer edge 8a, which acts as the cut edge 31 of the belt ply 8. In the belt reinforcement layer 21a in the present embodiment, the portion located at both sides, in the tire radial direction B, of the outer edge 8a of the belt ply 8 has a U-shaped cross-section connected farther outward, in the tire width direction A, than the belt ply 8, but this portion may be configured as separate, non-connected belt reinforcement layers. Also, the belt reinforcement layer 21a in the present embodiment extends in the tire width direction A so as to straddle the position, in the tire width direction A, of the outer edge 8a of the belt ply 8, but this configuration is not limiting. For example, belt plies may be arranged separately at both sides in the tire width direction A. In such a case, the belt reinforcement layer 21a may extend in the tire width direction A so as to straddle the position, in the tire width direction A, of the inner edge of the belt plies in the tire width direction A. In other words, it suffices for the belt reinforcement layer 21a to extend in the tire width direction A so as to straddle the position, in the tire width direction A, of the end, in the tire width direction A, acting as the cut edge 31 of the belt ply 8.

As illustrated in FIGS. 1 to 3, with respect to an outer edge 4b1, in the tire radial direction B, of the turn-up portion 4b that acts as the cut edge 31 of the carcass ply 4, the belt reinforcement layer 21b that is the other one of the reinforcement layers 21 covers the outer edge 4b1, which acts as the cut edge 31 of the carcass ply 4, at both sides (the inner side and outer side in the tire width direction A in the present embodiment) in the carcass ply thickness direction (the thickness direction at the position of the turn-up portion 4b of the carcass ply 4 in the present embodiment, which is a direction equivalent to the tire width direction A), which acts as the ply thickness direction. At the outer edge 4b1 as the cut edge of the carcass ply 4 in the present embodiment, a cord cut edge 34a of the ply cord 34 is exposed. The carcass reinforcement layer 21b in the present embodiment extends in the tire radial direction B so as to straddle the position, in the tire radial direction B, of the outer edge 4b1 at both sides, in the tire width direction A, of the outer edge 4b1, which acts as the cut edge 31 of the carcass ply 4. In the belt reinforcement layer 21b in the present embodiment, the portion located at both sides, in the tire width direction A, of the outer edge 4b1 of the carcass ply 4 has a U-shaped cross-section connected farther outward, in the tire radial direction B, than the turn-up portion 4b of the carcass ply 4, but this portion may be configured as separate, non-connected belt carcass reinforcement layers.

As illustrated in FIG. 2, the belt reinforcement layer 21a as the reinforcement layer 21 is configured by a non-woven fabric formed from metal fibers 22. The tensile rigidity of the belt reinforcement layer 21a is smaller than the tensile rigidity of the belt ply 8. As described above, the configuration of the carcass reinforcement layer 21b is the same as the configuration of the belt reinforcement layer 21a, and the carcass reinforcement layer 21b is also configured by a non-woven fabric formed from metal fibers 22. The tensile rigidity of the carcass reinforcement layer 21b is smaller than the tensile rigidity of the carcass ply 4.

During travel on a road surface by a vehicle on which the tire 1 is mounted, such a belt reinforcement layer 21a can suppress the concentration of stress, due to the difference in rigidity from the surrounding rubber, at the outer edge 8a of the belt ply 8 where the cord cut edge 32a of the ply cord 32 is exposed. Furthermore, since the belt reinforcement layer 21a is configured by a non-woven fabric formed from metal fibers 22, the belt reinforcement layer 21a itself is more flexible and deformable than if the belt reinforcement layer were configured by a metallic plate. At the end of the belt reinforcement layer 21a in the tire width direction A, the difference in rigidity from the surrounding rubber can therefore be reduced. In addition, since the belt reinforcement layer 21a is configured by a non-woven fabric formed from metal fibers 22, the adhesiveness with the surrounding rubber is greater than if the belt reinforcement layer were configured by a non-woven fabric of organic fibers. In this way, at the end of the belt reinforcement layer 21a in the tire width direction A, the difference in rigidity from the surrounding rubber is reduced, while the adhesiveness with the surrounding rubber is increased. The stress concentration at the location of the end of the belt reinforcement layer 21a in the tire width direction A can therefore be relieved. In other words, in addition to relieving the stress concentration at the location of the outer edge 8a of the belt ply 8, where the cord cut edge 32a of the ply cord 32 is exposed, provision of the above-described belt reinforcement layer 21a can also relieve the stress concentration at the location of the end of the belt reinforcement layer 21a. Consequently, the durability of the tire 1 can be improved.

Similarly, during travel on a road surface by a vehicle on which the tire 1 is mounted, such a carcass reinforcement layer 21b can suppress the concentration of stress, due to the difference in rigidity from the surrounding rubber, at the outer edge 4b 1 of the turn-up portion 4b of the carcass ply 4 where the cord cut edge 34a of the ply cord 34 is exposed. Furthermore, since the carcass reinforcement layer 21b is configured by a non-woven fabric formed from metal fibers 22, the carcass reinforcement layer 21b itself is more flexible and deformable than if the carcass reinforcement layer were configured by a metallic plate. At the end of the carcass reinforcement layer 21b in the tire radial direction B, the difference in rigidity from the surrounding rubber can therefore be reduced. In addition, since the carcass reinforcement layer 21b is configured by a non-woven fabric formed from metal fibers 22, the adhesiveness with the surrounding rubber is greater than if the carcass reinforcement layer were configured by a non-woven fabric of organic fibers. In this way, at the end of the carcass reinforcement layer 21b in the tire radial direction B, the difference in rigidity from the surrounding rubber is reduced, while the adhesiveness with the surrounding rubber is increased. The stress concentration at the location of the end of the carcass reinforcement layer 21b in the tire radial direction B can therefore be relieved. In other words, in addition to relieving the stress concentration at the location of the outer edge 4b1 of the turn-up portion 4b of the carcass ply 4, where the cord cut edge 34a of the ply cord 34 is exposed, provision of the above-described carcass reinforcement layer 21b can also relieve the stress concentration at the location of the end of the carcass reinforcement layer 21b. Consequently, the durability of the tire 1 can be improved.

The reinforcement layer 21 configured by a non-woven fabric formed from metal fibers 22 can be manufactured by various methods, and the manufacturing method is not limited. For example, a needle punch can be used to entangle metal fibers 22, obtained by various cutting methods, into a felt-like shape. The diameter of the metal fibers 22 can be changed by, for example, changing the amount of cutting, and the diameter of the metal fibers 22 that configure the above-described belt reinforcement layer 21a and carcass reinforcement layer 21b can be the same or different. The thickness and density of the non-woven fabric formed from the metal fibers 22 can be changed by, for example, changing the amount of metal fibers 22 that are punched and changing the number of vertical movements per unit time during needle punching.

The belt reinforcement layer 21a and the carcass reinforcement layer 21b in the present embodiment are configured by a non-woven fabric formed from metal fibers 22, but this configuration is not limiting. The reinforcement layer 21 may be configured by a rubber sheet material in which the metal fibers 22 are embedded. However, the reinforcement layer 21 is preferably configured by a non-woven fabric, as in the present embodiment. By the reinforcement layer 21 being a non-woven fabric, the edges of the metal fibers 22 tend not to be exposed on the outer surface of the reinforcement layer 21, and the occurrence of cracks in the surrounding rubber can be suppressed.

As illustrated in FIGS. 1 to 3, the belt reinforcement layer 21a as the reinforcement layer 21 in the present embodiment covers the outer edge 8a of the belt ply 8 at both sides (the inner side and outer side in the tire radial direction B in the present embodiment) in the ply thickness direction with respect to the position of the outer edge 8a as the cut edge 31 of the belt ply 8, where the cord cut edge 32a of the ply cord 32 is exposed.

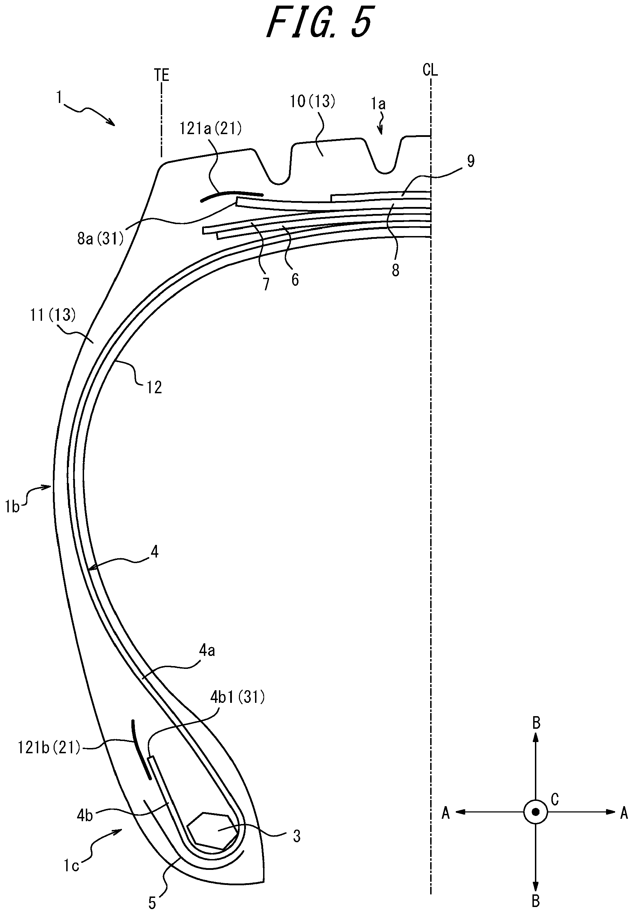

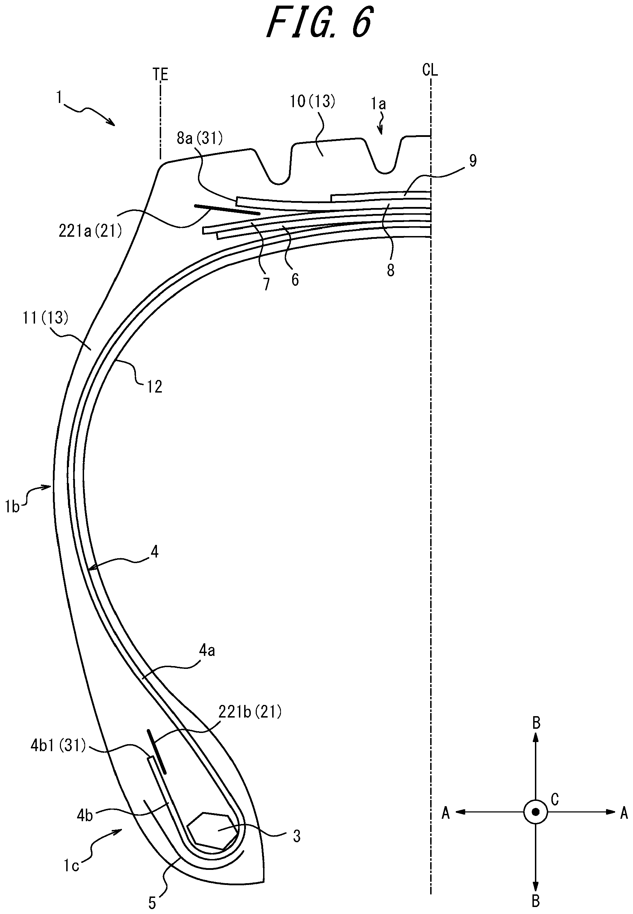

Specifically, the belt reinforcement layer 21a as the reinforcement layer 21 in the present embodiment has a substantially U-shaped cross-section in a tire widthwise cross-sectional view. The belt reinforcement layer 21a is disposed so as to cover the outer edge 8a of the belt ply 8 and a portion of the inner surface and outer surface of the belt ply 8 connected to this outer edge 8a in a tire widthwise cross-sectional view. In this way, the belt reinforcement layer 21a in the present embodiment covers the outer edge 8a of the belt ply 8 at both sides (the inner side and outer side in the tire radial direction B in the present embodiment) in the ply thickness direction with respect to the position of the outer edge 8a of the belt ply 8, where the cord cut edge 32a of the ply cord 32 is exposed. In the variations illustrated in FIGS. 5 and 6, which however do not form part of the present invention, belt reinforcement layers 121a, 221a may, in a tire widthwise cross-sectional view, extend outward in the tire width direction A to cover only a portion of the outer surface of the belt ply 8 connected to the outer edge 8a of the belt ply 8 (see FIG. 5) or cover only a portion of the inner surface (see FIG. 6), without bending in the tire radial direction B along the outer edge 8a of the belt ply 8.

Furthermore, as illustrated in FIGS. 1 to 3, the carcass reinforcement layer 21b as the reinforcement layer 21 in the present embodiment covers the outer edge 4b1 of the turn-up portion 4b of the carcass ply 4 at both sides (the inner side and outer side in the tire width direction A in the present embodiment) in the ply thickness direction with respect to the position of the outer edge 4b1 of the turn-up portion 4b as the cut edge 31 of the carcass ply 4, where the cord cut edge 34a of the ply cord 34 is exposed, but this configuration is not limiting.

Specifically, the carcass reinforcement layer 21b as the reinforcement layer 21 in the present embodiment has a substantially U-shaped cross-section in a tire widthwise cross-sectional view. The belt reinforcement layer 21b is disposed so as to cover the outer edge 4b1 of the turn-up portion 4b of the carcass ply 4 and a portion of the inner surface and outer surface of the turn-up portion 4b connected to this outer edge 4b1 in a tire widthwise cross-sectional view. In this way, the carcass reinforcement layer 21b as the reinforcement layer 21 in the present embodiment covers the outer edge 4b1 of the turn-up portion 4b of the carcass ply 4 at both sides (the inner side and outer side in the tire width direction A in the present embodiment) in the ply thickness direction with respect to the position of the outer edge 4b1 of the turn-up portion 4b of the carcass ply 4, where the cord cut edge 34a of the ply cord 34 is exposed. In the variations illustrated in FIGS. 5 and 6, which however do not form part of the present invention, carcass reinforcement layers 121b, 221b may, in a tire widthwise cross-sectional view, extend outward in the tire radial direction B to cover only a portion of the outer surface of the turn-up portion 4b connected to the outer edge 4b1 of the turn-up portion 4b of the carcass ply 4 (see FIG. 5) or cover only a portion of the inner surface (see FIG. 6), without bending in the tire width direction A along the outer edge 4b1 of the turn-up portion 4b of the carcass ply 4.

Furthermore, the belt reinforcement layer 21a in the present embodiment is provided around the outer edge 8a of one belt ply 8 among the four layers of belt plies 6 to 9, but this configuration is not limiting. The belt reinforcement layer 21a may be provided around the outer edge of one or more belt plies among the other three belt plies 6, 7, 9 in addition to or instead of the belt ply 8.

In the present embodiment, the belt ply 8 and the carcass ply 4 have been illustrated as plies to be reinforced by the reinforcement layer 21, but these specific examples are not limiting. Therefore, the reinforcement layer 21 may, for example, be disposed adjacent to a cut edge of a chafer ply forming the chafer 5 to reinforce the chafer ply. Specifically, the reinforcement layer 21 may extend in the tire radial direction B so that, with respect to the outer edge of the chafer ply in the tire radial direction B, the reinforcement layer 21 straddles the position, in the tire radial direction B, of the outer edge of the chafer ply in the tire radial direction B at one or both sides in the tire width direction A. Furthermore, the reinforcement layer 21 may be arranged to reinforce another ply.

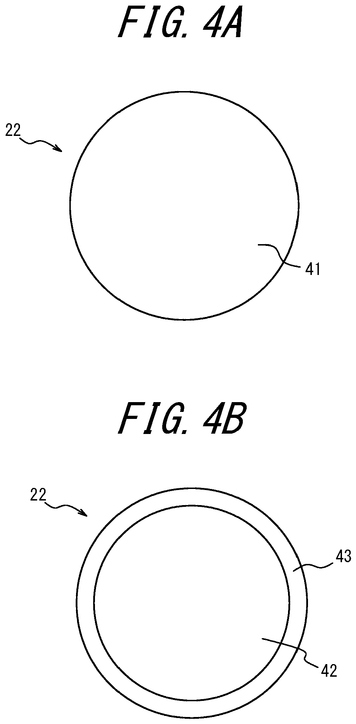

FIG. 4A is a cross-sectional view of the metal fiber 22 configuring the reinforcement layer 21. The metal fiber 22 is configured by steel, copper, aluminum, nickel, or an alloy including any of these. In other words, the metal fiber 22 illustrated in FIG. 4A is formed from a wire 41 composed of the above-described metal materials. In particular, the metal fibers 22 configuring the reinforcement layer 21 are preferably formed from brass. In this way, the adhesiveness to the surrounding rubber is enhanced as compared not only to organic fibers but also to metal fibers formed from the other metal materials described above, and the stress concentration at the end of the reinforcement layer 21 can be further relieved. However, instead of the metal fiber 22 itself being formed from brass, the surface of the metal fiber 22 can be configured as a coating film 43 formed from a binary alloy of copper and zinc, or a ternary alloy of copper, zinc, and cobalt, as illustrated in FIG. 4B. The metal fiber 22 illustrated in FIG. 4B is configured by a wire 42 as the base material and a coating film 43 laminated on the surface of the wire 42. The method of forming such a film 43 is not particularly limited but may, for example, be electrolytic treatment by binary alloy plating or ternary alloy plating, or a method of alloying by heat treatment after penetrating in copper plating and zinc plating baths to perform laminated plating treatment.

The density of the non-woven fabric configuring the reinforcement layer 21 is preferably 100 g/m² to 900 g/m² and in particular is preferably 200 g/m² to 600 g/m². When the density of the non-woven fabric configuring the belt reinforcement layer 21a is in the above range, the stress concentration at the end of the belt reinforcement layer 21a in the tire width direction A can be further relieved. Consequently, the durability of the tire 1 can be further improved. When the density of the non-woven fabric configuring the carcass reinforcement layer 21b is in the above range, the stress concentration at the end of the carcass reinforcement layer 21b in the tire radial direction B can be further relieved. Consequently, the durability of the tire 1 can be further improved. Furthermore, when the density of the non-woven fabric configuring the reinforcement layer 21 is in the above range, an excessive increase in the weight of the tire 1 due to the reinforcement layer 21 can also be suppressed. The density of the non-woven fabric configuring the reinforcement layer 21 refers to the mass per unit area as measured in accordance with ISO 9073-1. Specifically, the density of the non-woven fabric configuring the reinforcement layer 21 can be calculated by removing the non-woven fabric from the tire 1, melting or incinerating the rubber to remove the rubber, and then weighing the non-woven fabric itself and calculating the density.

Furthermore, the filament diameter of the non-woven fabric configuring the reinforcement layer 21 is preferably 10 µm to 75 µm and in particular is preferably 20 µm to 50 µm. In a case in which the cross-section is rectangular, the area may be replaced by the circular area. In this way, the durability of the tire 1 can be further enhanced, and an excessive increase in weight of the tire 1 can be also suppressed, for the same reasons as for the above-described density of the non-woven fabric.

In a tire widthwise cross-sectional view, the reinforcement layer 21 and the ply preferably overlap by 10 mm or more in a ply extension direction orthogonal to the ply thickness direction. Specifically, as illustrated in FIG. 2, the belt reinforcement layer 21a and the belt ply 8 in the present embodiment preferably have an overlap region L of 10 mm or more in the belt ply extension direction that is orthogonal to the belt ply thickness direction. While omitted from the drawings, the same is also true for the carcass reinforcement layer 21b and the turn-up portion 4b of the carcass ply 4 in the present embodiment. In other words, the carcass reinforcement layer 21b and the turn-up portion 4b of the carcass ply 4 in the present embodiment have an overlap region of 10 mm or more in the carcass ply extension direction that is orthogonal to the carcass ply thickness direction. The above-described overlap region L is preferably 20 mm to 60 mm. In this way, the durability of the tire 1 can be further enhanced, and an excessive increase in weight of the tire 1 can be also suppressed, for the same reasons as for the above-described density of the non-woven fabric.

### <Verification Test Using Test Pieces>

Next, an overview, along with the results, of a verification test conducted to verify the above-described effects of the reinforcement layer 21 are described. This verification test used three test pieces in which the cut edges of a plurality of steel fibers and the cut edges of another plurality of steel fibers were embedded in rubber so as to face each other while separated by approximately 10 mm. In the first test piece X1, the cut edges of the steel fibers were uncovered. In the second test piece X2, organic fibers extending along the fiber direction of the steel fibers were arranged between the cut edges of the separate pluralities of steel fibers that were facing each other. The overlap region L (see FIG. 2) of the second test piece X2 was 30 mm. The organic fibers used were nylon 6, with a mass of 470 dtex/1, and a number of embedded fibers equivalent to 78 fibers/5 cm. In the third test piece X3, the cut edges of the steel fibers were covered by a non-woven fabric formed from brass fibers and affixed to the steel fibers. The overlap region L (see FIG. 2) of the third test piece X3 was 30 mm. The brass used was C2680, the filament diameter of the non-woven fabric was 25 µm, and the density was 300 g/m². For the verification test, these three test pieces X1 to X3 were repeatedly subjected to a minimum load of 0.1 kN and a maximum load of 0.2 kN in the opposite direction (fiber direction) from the cut edges of the steel fibers at an ambient temperature of 70°C, and the number of repetitions to rupture was compared. Table 1 lists the results.

**[Table 1]**

| | Reinforcement | Number of repetitions |
|---|---|---|
| Test piece X1 | none | 1 |
| Test piece X2 | organic fibers | 3 |
| Test piece X3 | brass non-woven fabric | 18 |

The pneumatic tire according to the present invention is not limited to the specific configurations described in the above embodiments. Various modifications and changes may be made without departing from the scope of the present invention as defined by the appended claims.

### INDUSTRIAL APPLICABILITY

The present invention relates to a pneumatic tire.

### REFERENCE SIGNS LIST

1 Pneumatic tire
1a Tread portion
1b Sidewall portion
1c Bead portion
3 Bead member
4 Carcass ply (ply)
4a Main body
4b Turn-up portion
4b1 Outer edge of turn-up portion (cut edge)
5 Chafer
6 to 9 Belt ply (ply)
8a Outer edge of belt ply (tire widthwise edge of cut edge)
10 Tread rubber (cover rubber)
11 Side rubber (cover rubber)
12 Inner liner
13 Cover rubber
21 Reinforcement layer
21a, 121a, 221a Belt reinforcement layer (reinforcement layer)
21b, 121b, 221b Carcass reinforcement layer (reinforcement layer)
22 Metal fiber
31 Cut edge of ply
32 Ply cord of belt ply (cord)
32a Cord cut edge
33 Coating rubber of belt ply
34 Ply cord of carcass ply (cord)
34a Cord cut edge
35 Coating rubber of carcass ply
41, 42 Wire rod
43 Coating film
A Tire width direction
B Tire radial direction
C Tire circumferential direction
CL Tire equatorial plane
L Overlap region
TE Tread edge

## Claims

1. A pneumatic tire (1) comprising:
a ply (4, 6, 7, 8, 9) including a plurality of cords (32, 34) arranged in parallel to each other;
a cover rubber (13) covering the ply and configuring a tire outer surface; and
a reinforcement layer (21) that has a substantially U-shaped cross-section in a tire widthwise cross-sectional view and is disposed so as to cover a cut edge (31) of the ply and both surfaces on both sides in a ply thickness direction connected to the cut edge of the ply, wherein
the reinforcement layer is configured by
a non-woven fabric formed from metal fibers (22).

2. The pneumatic tire (1) according to claim 1, wherein the metal fibers (22) comprise steel, copper, aluminum, nickel, or an alloy including any of these.

3. The pneumatic tire (1) according to claim 2, wherein the metal fibers (22) comprise brass.

4. The pneumatic tire (1) according to claim 1, wherein a surface of the metal fibers (22) is configured by a coating film (43) comprising a binary alloy of copper and zinc or a ternary alloy of copper, zinc, and cobalt.

5. The pneumatic tire (1) according to any one of claims 1 to 4, wherein a density of the non-woven fabric is from 100 g/m² to 900 g/m².

6. The pneumatic tire (1) according to any one of claims 1 to 5, wherein a filament diameter of the non-woven fabric is from 10 µm to 75 µm.

7. The pneumatic (1) tire according to any one of claims 1 to 6, wherein in the tire widthwise cross-sectional view, the reinforcement layer (21) and the ply (4, 6, 7, 8, 9) overlap by 10 mm or more in a ply extension direction orthogonal to the ply thickness direction.

8. The pneumatic tire (1) according to any one of claims 1 to 7, wherein
the ply is a carcass ply (4) arranged to straddle a pair of bead members (3),
the cut edge (31) of the ply is an outer edge, in a tire radial direction, of a turn-up portion (4b) of the carcass ply that is wrapped around the pair of bead members and is turned up outward in a tire width direction with respect to the pair of bead members, and
the reinforcement layer (21) extends in a tire radial direction, with respect to the outer edge of the turn-up portion of the carcass ply, so as to straddle the outer edge in the tire radial direction on both sides in the tire width direction.

9. The pneumatic tire (1) according to any one of claims 1 to 7, wherein
the ply is a belt ply (6, 7, 8, 9) disposed in a tread portion (1a), and the cords (32, 34) extend at an angle relative to a tire width direction and a tire circumferential direction,
the cut edge (31) of the ply is an edge of the belt ply in the tire width direction, and
the reinforcement layer (21) extends in the tire width direction, with respect to the edge of the belt ply, so as to straddle the edge in the tire width direction on both sides in a tire radial direction.

10. The pneumatic tire (1) according to any one of claims 1 to 7, further comprising:
a carcass ply (4) comprising a turn-up portion (4b) formed by turning up around a bead member (3) from inside to outside in a tire width direction, wherein
the ply is a chafer ply (5) arranged outward from the bead member in the tire width direction and outward from the turn-up portion of the carcass ply in the tire width direction,
the cut edge (31) of the ply is an outer edge of the chafer ply in a tire radial direction, and
the reinforcement layer (21) extends in the tire radial direction, with respect to the outer edge of the chafer ply, so as to straddle the outer edge in the tire radial direction on both sides in the tire width direction.

## Patentansprüche

1. Luftreifen (1), Folgendes umfassend:
eine Lage (4, 6, 7, 8, 9) einschließlich einer Vielzahl von Korden (32, 34), die parallel zueinander angeordnet sind;
einen Deckgummi (13), der die Lage bedeckt und eine Reifenaußenfläche konfiguriert; und
eine Verstärkungsschicht (21), die einen im Wesentlichen U-förmigen Querschnitt in einer Querschnittsansicht in einer Reifenbreitenrichtung aufweist und so angeordnet ist, dass sie eine Schnittkante (31) der Lage und beide Flächen auf beiden Seiten in einer Lagendickenrichtung abdeckt, die mit der Schnittkante der Lage verbunden sind, wobei
die Verstärkungsschicht konfiguriert ist durch
einen aus Metallfasern (22) gebildeten Vliesstoff.

2. Luftreifen (1) nach Anspruch 1, wobei die Metallfasern (22) Stahl, Kupfer, Aluminium, Nickel oder eine Legierung umfassen, die eines dieser Elemente einschließt.

3. Luftreifen (1) nach Anspruch 2, wobei die Metallfasern (22) Messing umfassen.

4. Luftreifen (1) nach Anspruch 1, wobei eine Fläche der Metallfasern (22) durch einen Beschichtungsfilm (43) konfiguriert ist, der eine binäre Legierung aus Kupfer und Zink oder eine ternäre Legierung aus Kupfer, Zink und Kobalt umfasst.

5. Luftreifen (1) nach einem der Ansprüche 1 bis 4, wobei eine Dichte des Vliesstoffs 100 g/m² bis 900 g/m² beträgt.

6. Luftreifen (1) nach einem der Ansprüche 1 bis 5, wobei ein Filamentdurchmesser des Vliesstoffs 10 µm bis 75 µm beträgt.

7. Luftreifen (1) nach einem der Ansprüche 1 bis 6, wobei sich in der Querschnittsansicht in einer Reifenbreitenrichtung die Verstärkungsschicht (21) und die Lage (4, 6, 7, 8, 9) in einer Lagenerstreckungsrichtung orthogonal zur Lagendickenrichtung um 10 mm oder mehr überlappen.

8. Luftreifen (1) nach einem der Ansprüche 1 bis 7, wobei
die Lage eine Karkassenlage (4) ist, die angeordnet ist, um ein Paar Wulstelemente (3) zu überspannen,
die Schnittkante (31) der Lage eine Außenkante in einer Reifenradialrichtung eines Umschlagabschnitts (4b) der Karkassenlage ist, der um das Paar Wulstelemente gewickelt ist und in einer Reifenbreitenrichtung in Bezug auf das Paar Wulstelemente nach außen umgeschlagen ist, und
sich die Verstärkungsschicht (21) in einer Reifenradialrichtung in Bezug auf die Außenkante des Umschlagabschnitts der Karkassenlage erstreckt, sodass sie die Außenkante in der Reifenradialrichtung auf beiden Seiten in der Reifenbreitenrichtung überspannt.

9. Luftreifen (1) nach einem der Ansprüche 1 bis 7, wobei
die Lage eine Gürtellage (6, 7, 8, 9) ist, die in einem Laufflächenabschnitt (1a) angeordnet ist, und sich die Korde (32, 34) in einem Winkel relativ zu einer Reifenbreitenrichtung und einer Reifenumfangsrichtung erstrecken,
die Schnittkante (31) der Lage eine Kante der Gürtellage in der Reifenbreitenrichtung ist, und
sich die Verstärkungsschicht (21) in der Reifenbreitenrichtung in Bezug auf die Kante der Gürtellage erstreckt, um die Kante in der Reifenbreitenrichtung auf beiden Seiten in einer Reifenradialrichtung zu überspannen.

10. Luftreifen (1) nach einem der Ansprüche 1 bis 7, ferner Folgendes umfassend:
eine Karkassenlage (4), die einen Umschlagabschnitt (4b) umfasst, der durch Umschlagen um ein Wulstelement (3) herum von innen nach außen in einer Reifenbreitenrichtung gebildet ist, wobei
die Lage eine Wulstschutzbandlage (5) ist, die in der Reifenbreitenrichtung außerhalb des Wulstelements und in der Reifenbreitenrichtung außerhalb des Umschlagabschnitts der Karkassenlage angeordnet ist,
die Schnittkante (31) der Lage eine Außenkante der Wulstschutzbandlage in einer Reifenradialrichtung ist, und
sich die Verstärkungsschicht (21) in der Reifenradialrichtung in Bezug auf die Außenkante der Wulstschutzbandlage erstreckt, um die Außenkante in der Reifenradialrichtung auf beiden Seiten in der Reifenbreitenrichtung zu überspannen.

## Revendications

1. Bandage pneumatique (1) comprenant :
une nappe (4, 6, 7, 8, 9) incluant une pluralité de câblés (32, 34) disposés parallèlement l'un à l'autre,
un caoutchouc de recouvrement (13) recouvrant la nappe et configurant une surface extérieure de pneumatique ; et
une couche de renfort (21) qui a une section transversale sensiblement en forme de U dans une vue de section transversale dans le sens de la largeur du pneumatique et est disposée de façon à recouvrir un bord coupé (31) de la nappe et les deux surfaces sur les deux côtés dans une direction d'épaisseur de nappe connectées au bord coupé de la nappe, dans lequel
la couche de renfort est configurée par :
un tissu non-tissé formé de fibres métalliques (22).

2. Bandage pneumatique (1) selon la revendication 1, dans lequel les fibres métalliques (22) comprennent de l'acier, du cuivre, de l'aluminium, du nickel ou un alliage incluant un quelconque de ceux-ci.

3. Bandage pneumatique (1) selon la revendication 2, dans lequel les fibres métalliques (22) comprennent du laiton.

4. Bandage pneumatique (1) selon la revendication 1, dans lequel une surface des fibres métalliques (22) est configurée par un film de revêtement (43) comprenant un alliage binaire de cuivre et de zinc ou un alliage ternaire de cuivre, de zinc et de cobalt.

5. Bandage pneumatique (1) selon l'une quelconque des revendications 1 à 4, dans lequel une densité du tissu non-tissé est de 100 g/m² à 900 g/m².

6. Bandage pneumatique (1) selon l'une quelconque des revendications 1 à 5, dans lequel un diamètre de filament du tissu non-tissé est de 10 µm à 75 µm.

7. Bandage pneumatique (1) selon l'une quelconque des revendications 1 à 6, dans lequel, dans la vue de section transversale dans le sens de la largeur du pneumatique, la couche de renfort (21) et la nappe (4, 6, 7, 8, 9) se chevauchent sur 10 mm ou plus dans une direction d'extension de nappe orthogonale à la direction d'épaisseur de nappe.

8. Bandage pneumatique (1) selon l'une quelconque des revendications 1 à 7, dans lequel
la nappe est une nappe de carcasse (4) disposée pour enfourcher une paire d'éléments de talon (3),
le bord coupé (31) de la nappe est un bord extérieur, dans une direction radiale du pneumatique, d'une partie de repliement (4b) de la nappe de carcasse qui est enveloppée autour de la paire d'éléments de talon et est repliée vers l'extérieur dans une direction de largeur du pneumatique par rapport à la paire d'éléments de talon, et
la couche de renfort (21) s'étend dans une direction radiale du pneumatique, par rapport au bord extérieur de la partie de repliement de la nappe de carcasse, de façon à enfourcher le bord extérieur dans la direction radiale du pneumatique sur les deux côtés dans la direction de largeur du pneumatique.

9. Bandage pneumatique (1) selon l'une quelconque des revendications 1 à 7, dans lequel
la nappe est une nappe de ceinture (6, 7, 8, 9) disposée dans une partie de bande de roulement (1a), et les câblés (32, 34) s'étendent selon un angle par rapport à une direction de largeur du pneumatique et une direction circonférentielle du pneumatique,
le bord coupé (31) de la nappe est un bord de la nappe de ceinture dans la direction de largeur du pneumatique, et
la couche de renfort (21) s'étend dans la direction de largeur du pneumatique, par rapport au bord de la nappe de ceinture, de façon à enfourcher le bord dans la direction de largeur du pneumatique sur les deux côtés dans une direction radiale du pneumatique

10. Bandage pneumatique (1) selon l'une quelconque des revendications 1 à 7, comprenant en outre :
une nappe de carcasse (4) comprenant une partie de repliement (4b) formée en se repliant autour d'un élément de talon (3) de l'intérieur vers l'extérieur dans une direction de largeur du pneumatique, dans lequel
la nappe est une nappe de bandelette-talon (5) agencée vers l'extérieur de l'élément de talon dans la direction de largeur du pneumatique et vers l'extérieur de la partie de repliement de la nappe de carcasse dans la direction de largeur du pneumatique,
le bord coupé (31) de la nappe est un bord extérieur de la nappe de bandelette-talon dans une direction radiale du pneumatique, et
la couche de renfort (21) s'étend dans la direction radiale du pneumatique, par rapport au bord extérieur de la nappe de bandelette-talon, de façon à enfourcher le bord extérieur dans la direction radiale du pneumatique sur les deux côtés dans la direction de largeur du pneumatique.
